# EUROPÄISCHE PATENTSCHRIFT

(11) **EP 1 623 622 B1**
(45) Veröffentlichungstag und Bekanntmachung des Hinweises auf die Patenterteilung: **26.12.2007**
(21) Anmeldenummer: 05014410.4
(22) Anmeldetag: 02.07.2005
(51) Int. Cl.: A01K 97/10

(54) **Angelruten-Halter**
Fishing rod holder
Support de canne à pêche

(30) Priorität: 04.08.2004 DE 102004037945
(43) Veröffentlichungstag der Anmeldung: 08.02.2006
(73) Patentinhaber: FLM GmbH Foto-, Licht- und Messtechnisches Zubehör, 79312 Emmendingen (DE)
(72) Erfinder: Bürklin, Werner, 79312 Emmendingen (DE)
(74) Vertreter: Maucher, Wolfgang

(56) Entgegenhaltungen:
- WO-A-20/04030449
- DE-U1- 20 205 045
- PATENT ABSTRACTS OF JAPAN Bd. 2000, Nr. 10, 17. November 2000 (2000-11-17) -& JP 2000 201590 A (YAMAZAKI YOSHIHIKO), 25. Juli 2000 (2000-07-25)

## Beschreibung

Die Erfindung betrifft einen Angelruten-Halter zur fangbereiten Halterung wenigstens einer Angelrute, mit einem Ständer, der mehrere Erdspeere oder dergleichen ausschwenkbare Standbeine hat, sowie mit einem Haltearm, der am Ständer verschwenkbar gehalten ist und an zumindest einem seiner Armenden einen Rutenhalter trägt, wobei zumindest zwei Standbeine des Ständers mit wenigstens einem dritten Standbein über einen Querstab auf Abstand verbunden sind und wobei am Querstab der beidseits über den Querstab überstehende Haltearm drehbar gehalten ist.

Aus der WO 2004/030449 A ist bereits ein Angelruten-Halter der eingangs erwähnten Art bekannt, der zur fangbereiten Halterung von Angelruten dient. Der vorbekannte Angelruten-Halter weist einen Ständer auf, der mehrere ausschwenkbare Standbeine und einen Haltearm hat, der am Ständer verschwenkbar gehalten ist und an zumindest einem seiner Armenden einen Rutenhalter trägt. Dabei ist in Fig. 17 der WO 2004/030449 A ein Ausführungsbeispiel gezeigt, bei welchem der Ständer über einen Querstab mit einem weiteren Standbein auf Abstand verbunden ist und wobei am Querstab der beidseits über den Querstab überstehende Haltearm drehbar gehalten ist. Da der Querstab beidseits mit Abstand auf Standbeinen steht, können am Querstab auch mehrere Angelruten gleichzeitig sicher und stabil gehalten werden.

Aus der DE 102 58 085 ist bereits ein Angelruten-Haltesystem mit einem Ständer bekannt, der drei, an einem Ständerkopf ausschwenkbar gehaltene Standbeine hat. Auf der Oberseite des Ständerkopfes ist ein Haltearm vorgesehen, der beidseits an seinen Armenden einen Rutenhalter trägt. Mit Hilfe dieses vorbekannten Angelruten-Haltesystems können eine Angelrute oder mehrere Angelruten fangbereit gehalten werden. Bei der fangbereiten Halterung einer Angelrute ist jedoch die Stabilität des Angelruten-Haltesystems von Bedeutung.

Aus der DE 202 05 045 U1 ist ein zusammenlegbares Angelgestell bekannt, dass zur Aufnahme mehrerer Angelruten zumindest zwei Rumpfstangen umfasst, die beidseits des Angelgestells mit beiden Querstangen verbunden sind, welche vier Standbeine tragen. Diese Standbeine sind in die Transportposition verschwenkbar, in der sie im wesentlichen parallel zueinander und zu den Rumpfstangen verlaufen.

Aus der JP 2000 201590 A ist ein Angelruten-Halter bekannt, der einen aufklappbaren und gepäckträgerähnlich ausgestalteten Grundträger hat. An diesem Grundträger ist ein Haltearm verschwenkbar gehalten, der im gewünschten Winkel über einen Verbindungsarm gesichert werden kann, welcher Verbindungsarm einerseits am Haltearm und andererseits am Grundträger angreift. Die aus DE 202 05 045 U1 und JP 2000 201590 A vorbekannten Angelruten-Haltesysteme sind jedoch aufwendig im Aufbau und in der Handhabe.

Es besteht daher die Aufgabe, einen stabilen und vielseitig einsetzbaren Angelruten-Halter der eingangs erwähnten Art zu schaffen, der sich durch seine einfache Handhabung und seine hohe Stabilität auszeichnet.

Die erfindungsgemäße Lösung dieser Aufgabe besteht bei dem Angelruten-Halter der eingangs erwähnten Art insbesondere darin, dass der Haltearm an zumindest seinem einen Armende eine quer zum Haltearm orientierte Traghülse hat, dass im Hülseninneren der Traghülse ein zylinderförmiges Klemmstück drehbar gelagert ist, dass das Klemmstück einen Längsschlitz aufweist, dass im Verlaufe des Längsschlitzes zumindest eine Einstecköffnung für einen Einsteckzapfen des Rutenhalters vorgesehen ist, dass quer zu der zumindest einen Einstecköffnung eine Gewindeöffnung für eine Klemmschraube angeordnet ist, und dass die zumindest eine Einstecköffnung und die ihr zugeordnete Gewindeöffnung mit einem in Hülsen-Umfangsrichtung orientierten Langloch der Traghülse fluchten.

Durch Einschrauben der Klemmschraube wird somit nicht nur der in der Einstecköffnung befindliche Zapfen des Rutenhalters gesichert, vielmehr wird gleichzeitig auch das Klemmstück derart gespreizt, dass das Klemmstück in der Traghülse anschließend nicht mehr verdrehbar und somit auch der Rutenhalter nicht mehr verschwenkbar ist. Somit kann durch eine einzige Schraubbewegung an der entsprechenden Klemmschraube der Rutenhalter am Klemmstück gesichert und das Klemmstück in der gewünschten Drehposition am Angelruten-Halter drehfest fixiert werden.

Während bei herkömmlichen Angelruten-Haltesystemen der die Angelruten abstützende Haltearm von dem knotenartigen Ständerkopf getragen wird, ist dieser Haltearm beim erfindungsgemäßen Angelruten-Halter an einem Querstab drehbar befestigt, welcher Querstab zumindest zwei Standbeine des Ständers von einem dritten Standbein auf Abstand hält. Durch diesen Querstab, der dem Haltearm als Drehachse dient und die Standbeine des Ständers auf Abstand hält, wird das Gewicht des Haltearms und der auf ihm lastenden Angelruten besser verteilt. Die den erfindungsgemäßen Angelruten-Halter auszeichnende bessere Lastenverteilung führt zu einem sicheren Halt. Dabei kann der Haltearm zum Karpfen- und Raubfischangeln in eine waagrechte Position gebracht werden. Auch ist eine senkrechte Position des Haltearms möglich, um ein Brandungsangeln durchzuführen oder um im fließenden Gewässer zu angeln. Beim Brandungsangeln oder einem anderweitig fließenden Gewässer ist ein kurzer Angelfaden notwendig, weil ein längerer Angelfaden ansonsten mitgerissen und fortgetragen wird. Demgegenüber ist ein langer Angelfaden, der an einer waagrecht positionierten Angelrute gehalten ist, nur bei stehenden Gewässer sinnvoll.

Besonders vorteilhaft ist es, wenn an den Stabendbereichen des Querstabes jeweils zumindest zwei Standbeine vorgesehen sind. Ein solcher, zumindest vierbeiniger Angelruten-Halter zeichnet sich durch eine besonders hohe Stabilität aus.

Eine bevorzugte Ausführungsform gemäß der Erfindung sieht vor, dass der Haltearm aus zwei Armabschnitten gebildet ist, welche Armabschnitte am Querstab getrennt voneinander verschwenkbar gehalten sind. Diese getrennt voneinander verschwenkbaren Armabschnitte können so zueinander ausgerichtet werden, dass der Haltearm etwa in einer Linie angeordnet ist. Möglich ist aber auch, die Armabschnitte in eine V-Stellung zueinander zu bringen, die eine bessere Stabilität des Haltearmes und somit des gesamten Angelruten-Halters erlaubt. Bei einer derartigen V-Stellung der Armabschnitte liegen die Kraftlinien dieser Armabschnitte jeweils in der durch den Querstab gebildeten Drehachse, wodurch die hohe Stabilität des erfindungsgemäßen Angelruten-Halters noch zusätzlich begünstigt wird.

Um auf dem erfindungsgemäßen Angelruten-Halter auch mehrere Angeln gleichzeitig fangbereit zu lagern, ist es zweckmäßig, wenn der Haltearm beziehungsweise zumindest einer seiner Armabschnitte aus zwei miteinander verbundenen Rohrabschnitten oder dergleichen Armteilen gebildet ist. Ein derartiger Haltearm, der zumindest einen aus zwei miteinander verbundenen Rohrabschnitten oder dergleichen Armteilen gebildeten Armabschnitt aufweist, kann auch vergleichsweise große Lasten tragen.

Die hohe Stabilität des erfindungsgemäßen Angelruten-Halters wird noch begünstigt und auch längere Angelruten lassen sich auf dem erfindungsgemäßen Angelruten-Halter bequem lagern, wenn zumindest ein Armabschnitt des Haltearmes beziehungsweise dessen Armteile längenveränderbar und dazu vorzugsweise teleskopartig ausgebildet ist.

Um den Haltearm an dem als Drehachse dienenden Querstab in die gewünschte Position verschwenken und festlegen zu können, ist es vorteilhaft, wenn die Armabschnitte des Haltearmes am Querstab jeweils vorzugsweise mittels einer Drehrasterung verstellbar und festlegbar sind.

Derartige Angelruten-Haltesysteme werden regelmäßig mit elektronischen Bissanzeigern verwendet. Diese elektronischen Bissanzeiger setzen eine möglichst lotgerechte Position des diese Bissanzeiger tragenden Rutenhalters voraus. Um den Rutenhalter daher in eine entsprechende Position bringen zu können, ist es vorteilhaft, wenn der zumindest eine Rutenhalter an dem ihn zugeordneten Armende des Haltearmes in einer etwa parallel zum Haltearm verlaufenden Drehebene verdrehbar und festlegbar gehalten ist.

Weitere Merkmale der Erfindung ergeben sich aus der folgenden Beschreibung eines erfindungsgemäßen Ausführungsbeispieles in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig. 1: den in einer Seitenansicht gezeigten und mit ausgeschwenkten Standbeinen dargestellten Ständer eines Angelruten-Halters, wobei der Angelruten-Halter einen Haltearm mit zwei getrennt voneinander verschwenkbaren Armabschnitten hat, welche Armabschnitte hier in einer V-Position zueinander angeordnet sind,
- Fig. 2: den Angelruten-Halter aus Figur 1 in einer TeilSeitenansicht im Bereich seines Ständer-Kopfes,
- Fig. 3: den Ständer-Kopf des in Figur 1 und 2 dargestellten Angelruten-Halters in einer Draufsicht, wobei dieser Ständer-Kopf einen Querstab hat, an dessen Stabenden jeweils zwei auseinanderschwenkbare Standbeine vorgesehen sind,
- Fig. 4: den Querstab des in den Figuren 1 bis 3 gezeigten Angelruten-Halters in einem Teil-Längsschnitt,
- Fig. 5: den Querstab aus Figur 4 in einem Querschnitt,
- Fig. 6: den an einem der Armenden eines Haltearmes lösbar befestigbaren Rutenhalter des Angelruten-Halters gemäß den Figuren 1 bis 5,
- Fig. 7: eine zur Aufnahme eines Rutenhalters bestimmte Traghülse in einem Teil-Längsschnitt,
- Fig. 8: die Traghülse aus Figur 7 in einem Querschnitt, und
- Fig. 9: ein in die Traghülse aus Figur 7 und 8 einsetzbares Klemmstück in einem Längsschnitt.

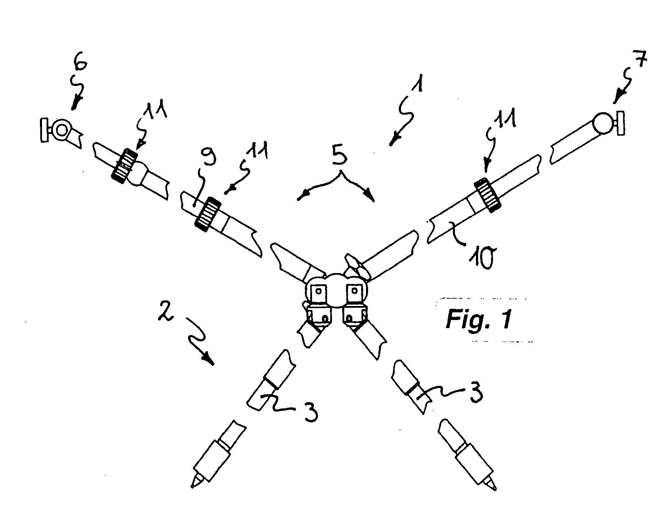

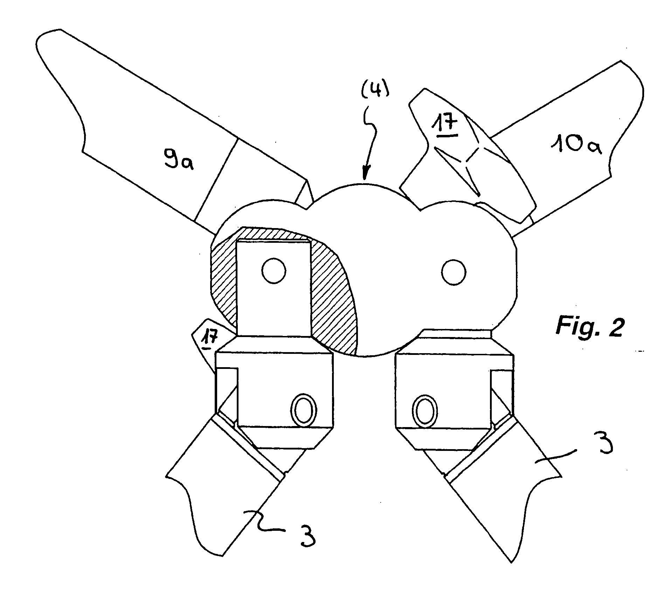

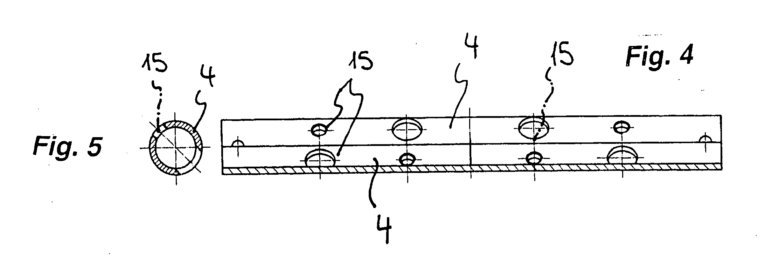

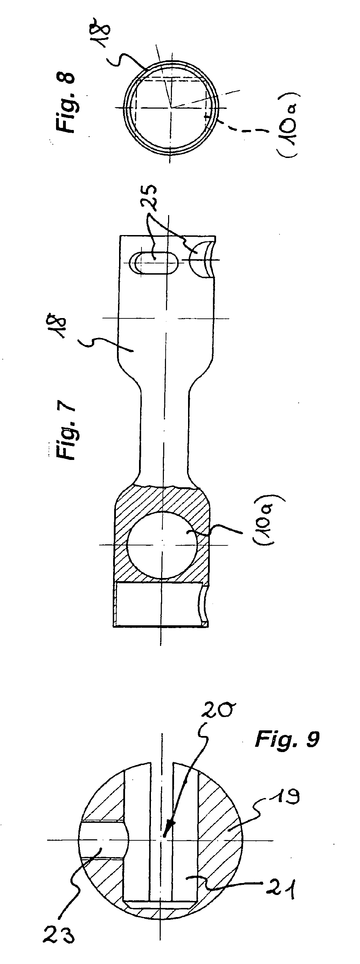

In den Figuren 1 bis 9 ist ein Angelruten-Halter 1 in verschiedenen Detailansichten dargestellt. Der Angelruten-Halter 1, der zur fangbereiten Halterung wenigstens einer Angelrute vorgesehen ist, weist einen in den Figuren 1 bis 3 gezeigten Ständer 2 auf, der vier ausschwenkbare Standbeine 3 hat.

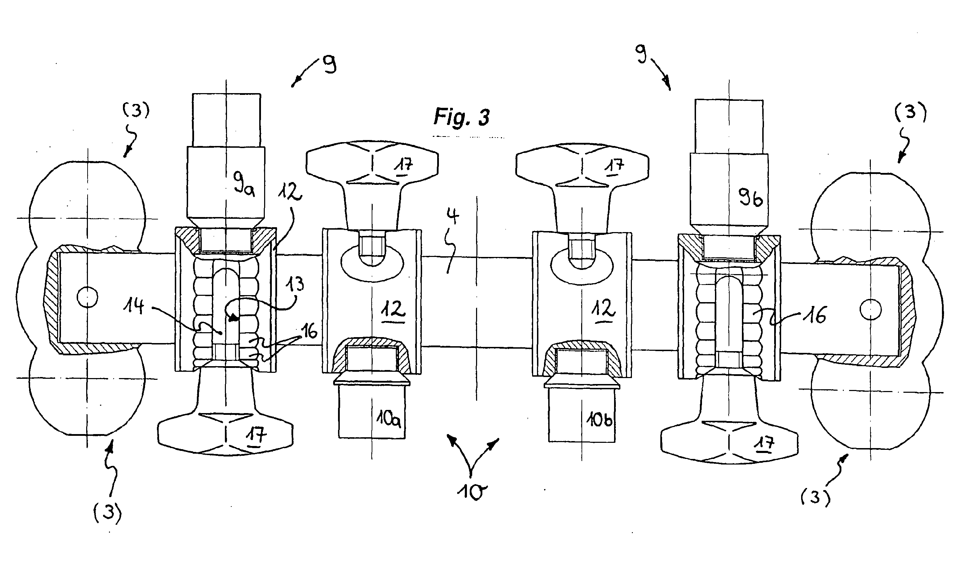

Wie aus den Figuren 3 bis 5 ersichtlich ist, hat der Ständer 2 einen Querstab 4, an dessen Stabenden jeweils zwei ausschwenkbare Standbeine 3 vorgesehen sind. Die Standbein-Paare 3 sind über den Querstab 4 auf Abstand gehalten. Dabei dient der Querstab 4 einem über den Querstab 4 beidseits überstehenden Haltearm 5 als Drehachse. Der Haltearm 5 ist an dem als Drehachse dienenden Querstab 4 drehbar gehalten. An den freien Armenden 6, 7 des Haltearmes 5 ist jeweils ein Rutenhalter 8 vorgesehen. Auf den Rutenhaltern 8 können eine Angelrute oder mehrere Angelruten fangbereit gelagert werden.

In Figur 1 ist erkennbar, dass der Haltearm 5 aus zwei Armabschnitten 9, 10 gebildet ist. In Figur 3 ist gezeigt, dass jeder Armabschnitt 9, 10 aus zwei miteinander verbundenen Rohrabschnitten oder Armteilen 9a, 9b bzw. 10a, 10b besteht, und dass die Armabschnitte 9, 10 mit ihren Armteilen 9a, 9b, 10a, 10b getrennt voneinander am Querstab 4 verschwenkbar gelagert sind.

Aus Figur 1 wird deutlich, dass die Armabschnitte 9, 10 des Haltearmes 5 beziehungsweise deren Armteile 9a, 9b, 10a, 10b längenveränderbar und dazu teleskopartig ausgebildet sind. Dabei können die Armabschnitte 9, 10 mit ihren teleskopartig ineinandergreifenden Armteilen 9a, 9b bzw. 10a, 10b mittels Klemmstücken 11 in der gewünschten Länge gesichert werden.

Auch die Standbeine 3 des Ständers 2 bestehen jeweils aus teleskopartig ineinandergreifenden Rohrabschnitten, die jeweils in der gewünschten Länge eines Standbeines gesichert werden können.

In Figur 3 ist erkennbar, dass die Armabschnitte 9, 10 des Haltearmes 5 am Querstab 4 jeweils mittels einer Drehrasterung verstellbar und festlegbar sind. Die Armteile 9a, 9b bzw. 10a, 10b der Armabschnitte 9, 10 greifen dazu am Querstab 4 jeweils mit einer Drehhülse 12 an, die ein in Umfangsrichtung orientiertes Langloch 13 trägt. Die an den Armteilen 9a, 9b bzw. 10a, 10b vorgesehenen Langlöcher 13 werden jeweils durch eine Klemmschraube 14 durchsetzt, die in eine mit dem zugeordneten Langloch 13 fluchtende Schraubenöffnung 15 eingeschraubt ist. Der ein Langloch 13 begrenzende Randbereich der Drehhülse 12 weist eine Zahnung oder dergleichen Profilierung 16 auf, die mit dem zugewandten Stirnbereich des Schraubenkopfes oder der Schraubenmutter 17 der Klemmschraube 14 zusammenwirkt .

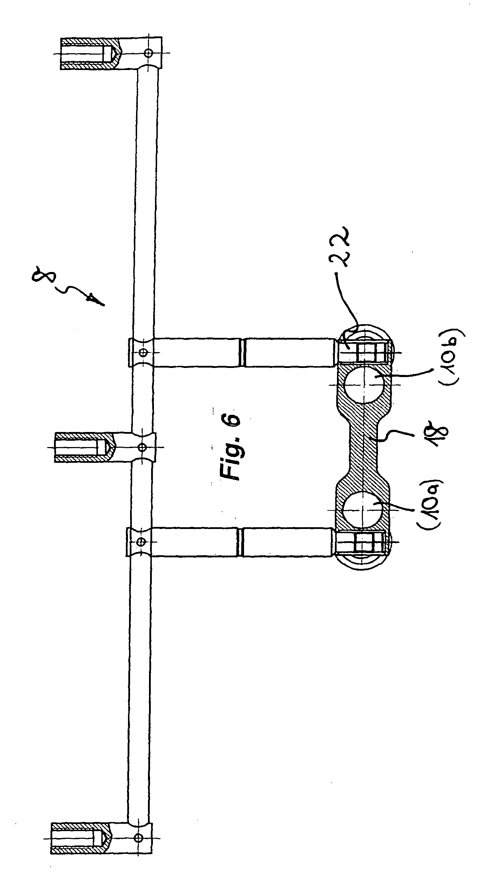

Die Armteile 9a, 9b bzw. 10a, 10b jedes Armabschnittes 9, 10 sind an ihren freien Enden über eine Traghülse 18 miteinander verbunden. Aus Figur 6 ist erkennbar, dass an den Armenden der Armabschnitte 9, 10 jeweils ein Rutenhalter 8 lösbar befestigbar ist. Um den an einem Armende befestigten Rutenhalter 8 ausrichten zu können, ist dieser am Haltearm 5 in einer etwa parallel zum Haltearm 5 verlaufenden Drehebene verdrehbar und festlegbar gehalten.

Wie aus einer zusammenschauenden Betrachtung der Figuren 6 bis 9 deutlich wird, ist im Hülseninneren der zwei Armteile 9a, 9b bzw. 10a, 10b verbindenden Traghülse 18 ein zylinderförmiges Klemmstück 19 drehbar gelagert. Dieses Klemmstück 19 weist einen Längsschlitz 20 auf, in dessen Verlauf eine Einstecköffnung 21 für einen Einsteckzapfen 22 des Rutenhalters 8 vorgesehen ist. Quer zur Einstecköffnung 21 ist eine Gewindeöffnung 23 für eine Klemmschraube angeordnet. Dabei fluchten die Einstecköffnung 21 und die ihr zugeordnete Gewindeöffnung 23 mit einem in Hülsen-Umfangsrichtung orientierten Langloch 25 der Traghülse 18. Durch Einschrauben der Klemmschraube in die Gewindeöffnung 23 wird somit nicht nur der in der Einstecköffnung 21 befindliche Einsteckzapfen 22 eines Rutenhalters 8 gesichert, - vielmehr wird gleichzeitig auch das Klemmstück 19 derart gespreizt, dass es anschließend drehfest in der Traghülse 18 gesichert ist.

Während bei herkömmlichen Angelruten-Haltesystemen der die Angelruten abstützende Haltearm von einem knotenartigen Ständer-Kopf getragen wird, ist dieser Haltearm 5 bei dem hier dargestellten Angelruten-Halter 1 an dem Querstab 4 drehbar befestigt, welcher Querstab 4 die Standbeine 3 auf Abstand hält. Durch diesen Querstab 4, der dem Haltearm 5 gleichzeitig als Drehachse dient und die Standbeine 3 des Ständers 2 auf Abstand hält, wird das Gewicht des Haltearmes 5 und der auf ihm lastenden Angelruten besser verteilt. Die den hier dargestellten Angelruten-Halter 1 auszeichnende bessere Lastenverteilung führt zu einem sicheren Halt.

## Patentansprüche

1. Angelruten-Halter (1) zur fangbereiten Halterung wenigstens einer Angelrute, mit einem Ständer (2), der mehrere Erdspeere oder dergleichen ausschwenkbare Standbeine (3) hat, sowie mit einem Haltearm (5), der am Ständer (2) verschwenkbar gehalten ist und an zumindest einem seiner Armenden einen Rutenhalter (8) trägt, wobei zumindest zwei Standbeine (3) des Ständers (2) mit wenigstens einem dritten Standbein (3) über einen Querstab (4) auf Abstand verbunden sind und wobei am Querstab (4) der beidseits über dem Querstab (4) überstehende Haltearm (5) drehbar gehalten ist, **dadurch gekennzeichnet, dass** der Haltearm (5) an zumindest seinem einen Armende (6, 7) eine quer zum Haltearm (5) orientierte Traghülse (18) hat, dass im Hülseninneren der Traghülse (18) ein zylinderförmiges Klemmstück (19) drehbar gelagert ist, dass das Klemmstück (19) einen Längsschlitz (20) aufweist, dass im Verlaufe des Längsschlitzes (20) zumindest eine Einstecköffnung (21) für einen Einsteckzapfen (22) des Rutenhalters (8) vorgesehen ist, dass quer zu der zumindest einen Einstecköffnung (21) eine Gewindeöffnung (23) für eine Klemmschraube (24) angeordnet ist und dass die zumindest eine Einstecköffnung (21) und die ihr zugeordnete Gewindeöffnung (23) mit einem in Hülsen-Umfangsrichtung orientierten Langloch (25) der Traghülse (18) fluchten.

2. Angelruten-Halter nach Anspruch 1, **dadurch gekennzeichnet, dass** an den Stabendbereichen des Querstabes (4) jeweils zumindest zwei Standbeine (3) vorgesehen sind.

3. Angelruten-Halter nach Anspruch 1 oder 2, **dadurch gekennzeichnet, dass** der Haltearm (5) aus zwei Armabschnitten (9, 10) gebildet ist, welche Armabschnitte (9, 10) am Querstab (4) getrennt voneinander verschwenkbar gehalten sind.

4. Angelruten-Halter nach einem der Ansprüche 1 bis 3, **dadurch gekennzeichnet, dass** der Haltearm (5) beziehungsweise zumindest einer seiner Armabschnitte (9, 10) aus zwei miteinander verbundenen Rohrabschnitten oder dergleichen Armteilen (9a, 9b; 10a, 10b) gebildet ist.

5. Angelruten-Halter nach einem der Ansprüche 1 bis 4, **dadurch gekennzeichnet, dass** zumindest ein Armabschnitt (9, 10) des Haltearmes (5) beziehungsweise dessen Armteile (9a, 9b; 10a, 10b) längenveränderbar und dazu vorzugsweise teleskopartig ausgebildet ist.

6. Angelruten-Halter nach einem der Ansprüche 3 bis 5, **dadurch gekennzeichnet, dass** die Armabschnitte (9, 10) des Haltearmes (5) am Querstab (4) jeweils vorzugsweise mittels einer Drehrasterung verstellbar und festlegbar sind.

7. Angelruten-Halter nach einem der Ansprüche 1 bis 6, **dadurch gekennzeichnet, dass** der zumindest eine Rutenhalter (8) an dem ihm zugeordneten Armende des Haltearmes (5) in einer parallel zum Haltearm (5) verlaufende Drehebene verdrehbar und festlegbar gehalten ist.

8. Angelruten-Halter nach einem der Ansprüche 1 bis 7, **dadurch gekennzeichnet, dass** die Traghülse (18) die einen Armabschnitt (9, 10) bildenden Rohrabschnitte oder dergleichen Armteile (9a, 9b; 10a, 10b) miteinander verbindet.

## Claims

1. A fishing rod holder (1) for holding at least one fishing rod in readiness for use, with a supporting stand (2) having several bank sticks or similar swivelling legs (3), and having a support arm (5) that is retained in swivelling manner on the stand (2) and supports a rod holder (8) on at least one of the arm ends, wherein at least two legs (3) of the stand (2) are connected to and separated from at least one third leg (3) via a cross bar (4), and wherein the support arm is retained in swivelling manner on the cross bar (4) and protrudes beyond the cross bar (4) on both sides, **characterized in that** the support arm (5) has a carrying sleeve (18) arranged transversely to the support arm (5) on at least one of its arm ends (6, 7), that a cylindrical clamping element (19) is supported in swivelling manner in the inside of the carrying sleeve (18), that the clamping element (19) is furnished with a slot (20), that at least one insertion aperture (21) for an insertion pin (22) of the rod holder (8) is provided in the run of the slot (20), that a threaded aperture (23) for a clamping screw (24) is provided transversely to the at least one insertion aperture (21), and that the at least one insertion aperture (21) and the threaded aperture (23) assigned thereto are aligned with a slot (25) of the carrying sleeve (18) extending circumferentially around the sleeve.

2. The fishing rod holder as recited in claim 1, **characterized in that** at least two legs (3) are provided at each bar end area of the cross bar (4).

3. The fishing rod holder as recited in claim 1 or 2, **characterized in that** the support arm (5) is formed from two arm sections (9, 10), which arm sections (9, 10) are braced on the cross bar (4) in swivelling manner and separately from each other.

4. The fishing rod holder as recited in any of claims 1 to 3, **characterized in that** the support arm (5) or at least one of its arm sections (9, 10) is formed from two tube sections of similar arm members (9a, 9b; 10a, 10b) that are connected to each other.

5. The fishing rod holder as recited in any of claims 1 to 4, **characterized in that** at least one arm section (9, 10) of the support arm (5) or arm members (9a, 9b; 10a, 10b) thereof is adjustable lengthwise, and is preferably constructed telescopically for this purpose.

6. The fishing rod holder as recited in any of claims 3 to 5, **characterized in that** each of the arm sections (9, 10) of the support arm (5) is adjustable and fixable on the cross bar (4), preferably via a rotary detent.

7. The fishing rod holder as recited in any of claims 1 to 6, **characterized in that** the at least one rod holder (8) is retained so as to be rotatable and fixable in a plane of rotation extending parallel to the support arm (5) on the arm end of the support arm (5) assigned thereto.

8. The fishing rod holder as recited in any of claims 1 to 7, **characterized in that** the carrying sleeve (18) connects the tube sections or similar arm members (9a, 9b; 10a, 10b) that form an arm section (9, 10) to each other.

## Revendications

1. Support de canne à pêche (1) pour supporter à portée de main au moins une canne à pêche, comportant une béquille (2) qui présente plusieurs piquets ou pieds similaires pivotables vers l'extérieur (3) ainsi qu'un bras de retenue (5) qui est maintenu de manière à pouvoir pivoter sur la béquille (2) et supporte à au moins une de ses extrémités de bras un support de canne (8), tandis qu'au moins deux pieds (3) de la béquille (2) sont reliés à distance à au moins un troisième pied (3) par une traverse (4) et que le bras de retenue (5) dépassant des deux côtés de la traverse (4) est maintenu de manière à pouvoir tourner, **caractérisé en ce que** le bras de retenue (5) comporte à au moins une de ses extrémités de bras (6, 7) un manchon porteur (18) orienté transversalement au bras de retenue (5), qu'à l'intérieur du manchon porteur (18), une pièce de serrage de forme cylindrique (19) s'appuie en rotation, que la pièce de serrage (19) présente une fente longitudinale (20), que, sur l'extension de la fente longitudinale (20), il est prévu au moins un orifice d'insertion (21) pour un tourillon inséré (22) du support de canne (8), que, transversalement à l'au moins un orifice d'insertion (21), un orifice fileté (23) pour une vis de serrage (24) est pratiqué et que l'au moins un orifice d'insertion (21) et l'orifice fileté (23) qui lui est associé sont alignés avec un trou oblong (25) orienté dans le sens circonférentiel de manchon du manchon porteur (18).

2. Support de canne à pêche selon la revendication 1, **caractérisé en ce qu'**au niveau des bouts de barre de la traverse (4), respectivement au moins deux pieds (3) sont prévus.

3. Support de canne à pêche selon la revendication 1 ou 2, **caractérisé en ce que** le bras de retenue (5) est constitué de deux sections de bras (9, 10), lesquelles sections de bras (9, 10) sont maintenues de manière à pouvoir pivoter séparément l'une de l'autre sur la traverse (4).

4. Support de canne à pêche selon une des revendications 1 à 3, **caractérisé en ce que** le bras de retenue (5) ou au moins une de ses sections de bras (9, 10) est constitué de deux sections de tube ou pièces de bras similaires (9a, 9b ; 10a, 10b) reliées entre elles.

5. Support de canne à pêche selon une des revendications 1 à 4, **caractérisé en ce qu'**au moins une section de bras (9, 10) du bras de retenue (5) ou ses pièces de bras (9a, 9b ; 10a, 10b) peuvent changer de longueur et sont à cet effet de préférence réalisées en modèle télescopique.

6. Support de canne à pêche selon une des revendications 3 à 5, **caractérisé en ce que** les sections de bras (9, 10) du bras de retenue (5) peuvent être déplacées et fixées respectivement sur la traverse (4) de préférence au moyen d'un enclenchement rotatif.

7. Support de canne à pêche selon une des revendications 1 à 6, **caractérisé en ce que** l'au moins un support de canne (8) est maintenu de manière à pouvoir pivoter et être fixé à l'extrémité de bras qui lui est associée du bras de retenue (5) dans un plan de rotation s'étendant parallèlement au bras de retenue (5).

8. Support de canne à pêche selon une des revendications 1 à 7, **caractérisé en ce que** le manchon porteur (18) relie entre elles les sections de tube ou pièces de bras similaires (9a, 9b ; 10a, 10b) formant une section de bras (9, 10).
